(19) Europäisches Patentamt / European Patent Office / Office européen des brevets

(11) **EP 3 762 693 B1**

(12) # EUROPEAN PATENT SPECIFICATION

(45) Date of publication and mention
of the grant of the patent:
**20.12.2023  Bulletin 2023/51**

(21) Application number: **19711677.5**

(22) Date of filing: **07.03.2019**

(51) International Patent Classification (IPC):
**G01J 5/00** *(2022.01)*     **G01J 5/04** *(2006.01)*
**G01J 5/60** *(2006.01)*

(52) Cooperative Patent Classification (CPC):
**G01J 5/0022; B21C 31/00; G01J 5/0003;
G01J 5/004; G01J 5/047; G01J 5/48; G01J 5/485;
G01J 5/60;** B29C 48/92; B29C 2948/92209;
B29C 2948/92447; B29C 2948/92485

(86) International application number:
**PCT/GB2019/050641**

(87) International publication number:
**WO 2019/171065 (12.09.2019 Gazette 2019/37)**

(54) **ALIGNMENT SYSTEM FOR AN INFRA-RED SENSOR**

AUSRICHTUNGSSYSTEM FÜR EINEN INFRAROTSENSOR

SYSTÈME D'ALIGNEMENT DESTINÉ À UN CAPTEUR INFRAROUGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.03.2018  GB 201803772**

(43) Date of publication of application:
**13.01.2021  Bulletin 2021/02**

(73) Proprietor: **Land Instruments International
Limited
Leicester, Leicestershire LE4 9JQ (GB)**

(72) Inventor: **TURNER, Susan Fiona
Leicester, Leicestershire LE4 9JQ (GB)**

(74) Representative: **Gill Jennings & Every LLP
The Broadgate Tower
20 Primrose Street
London EC2A 2ES (GB)**

(56) References cited:
US-A- 5 144 122         US-A1- 2007 187 605
US-A1- 2010 299 098

• L. LI ET AL: "Prediction of temperature evolution
during the extrusion of 7075 aluminium alloy at
various ram speeds by means of 3D FEM
simulation", JOURNAL OF MATERIALS
PROCESSING TECHNOLOGY, vol. 145, no. 3, 1
February 2004 (2004-02-01), pages 360-370,
XP055593602, NL ISSN: 0924-0136, DOI:
10.1016/j.jmatprotec.2003.09.003

• KIRBY P J: "MEASURING HOT METALS ON THE
MOVE", CONTROL SOLUTIONS, PENNWELL
PUBLISHING, TULSA, OK, US, vol. 65, no. 6, 1
June 1992 (1992-06-01), pages 25-28,
XP000307173, ISSN: 1074-2328

**Description**

The present invention relates to a system and method for aligning an infra-red sensor with a hot extruded body such as an aluminium extrusion.

Temperature monitoring and control is required for many industrial processes, to ensure product quality and optimise process efficiency. Infra-red spot thermometers or pyrometers are frequently employed when a non-contact method of measurement is required. Spot thermometers measure temperature over a small area on a target surface and are relatively inexpensive compared to wide-field thermal imagers. In many processes the temperature variation across the product is slight, so measurement at a single spot can provide sufficient accuracy.

Accurate temperature control is essential in metal extrusion in order to provide a final product with the desired properties. If the temperature is too hot then the surface finish can be spoiled. Conversely, if the temperature is too low then product hardness may be compromised. Modern press control systems dynamically adjust press settings such as ram speed during the extrusion of each billet in an attempt to maintain a constant extrusion temperature at a press exit. The quench rate for some extruded materials must also be controlled carefully. In the example of extruded aluminium the desirable quench rate is at least 2 degrees per second. It is desirable to monitor the cooling rate of a quenched aluminium extrusion so that process settings can be dynamically adjusted to maintain product hardness.

Conventional techniques for monitoring the temperature of aluminium extrusions use an infra-red spot thermometer. In one example a spot thermometer is mounted above the output end of an extrusion press. The spot thermometer is provided with an optical pointer, such as an LED or laser, that can project a guide spot onto an extruded body. During setup an operator will climb up to the position of the spot thermometer and manually position it so that the laser guide spot is projected onto the extruded body. This can be time consuming and dangerous. In addition, the extrusion can 'wander' laterally during a production run which may cause a misalignment with the extruded body. This is particularly problematic for post-quench positions that are distant from the die. It can be difficult to correct for this kind of lateral movement when the position of the thermometer is controlled manually.

US5144122 A discloses a scanning radiation sensor which is used to scan a temperature profile of a target such as a piece of extruded material.

Some infra-red spot thermometers are provided with a motor and a remote control for adjusting orientation. This can address some safety concerns, but alignment is still a slow process that is prone to error because it is still based on visual alignment by an operator using a laser guide spot.

An extrusion is produced by pressing a heated billet against a die, and dies can be provided with a number of cavities, each producing an extrusion. Die cavities may be provided in different positions which means that an operator typically needs to realign an infra-red spot thermometer whenever a die is changed. This introduces a delay to the process whenever a die is changed, and this can affect production efficiency.

Industry 4.0 presents a number of opportunities for the metal extrusion industry, and solutions are required that can take advantage of these opportunities. An object of the present invention is to address some of these issues and to provide a system and method for aligning an infra-red sensor for the next generation of hot body extruders.

According to an aspect of the invention there is provided an apparatus for automatically aligning an infra-red sensor with a hot extruded body, comprising: an infra-red sensor having an axis along which radiation is received; a scanner configured to move the infra-red sensor between a plurality of positions so that the axis of the infra-red sensor is pointed in a plurality of directions; and a processor configured to: analyse the amount of infra-red radiation received in the plurality of positions to determine an infra-red profile; identify a first position in which the axis of the infra-red sensor points at a first extruded body based on the infra-red profile; instruct the scanner to move the infra-red sensor to the first position so that the temperature of the first extruded body can be measured; instruct the scanner to move the infra-red sensor between a plurality of positions to either side of the first position; construct a second infra-red profile based on the radiation received in the positions either side of the first position; determine if the extruded body has moved laterally based on the second infra-red profile, and if lateral movement is identified, the processor is further configured to instruct the infra-red sensor to move to a new position so that it can continue to point at the extruded body.

In this way, the apparatus can perform a scan and can be pointed automatically at the first extruded body. This enables rapid positioning of the infra-red sensor so that it can monitor the temperature of the extruded body. This offers a significant improvement over existing methods because it is faster and more accurate. This may be used for measuring the temperature of extruded metals including aluminium. It may also be suitable for measuring the temperatures of wires produced by wire drawing equipment.

The processor is preferably configured to determine temperature values based on the amount of infra-red radiation received in the plurality of positions. In this way, the first position of the infra-red sensor may be identified based on the temperature value in the first position and in a plurality of positions around the first position. Temperature is a function of the amount of infra-red radiation received (i.e. the radiative flux) and often an infra-red sensor will give an output as a temperature value. This temperature value is typically derived from underlying raw radiance data which is not always available as a direct output from infra-red sensors.

The scanner may be arranged to rotate the infra-red sensor so that it is pointed in different directions. In an alternative arrangement the scanner may be arranged to translate the infra-red sensor so that it points in different directions. These directions may be parallel but different because they are displaced from one another laterally.

The scanner may be mounted at the extrusion press exit, so that it can view and measure the temperature of the profiles immediately or within a few seconds after extrusion. Other scanners may be mounted further down the production line, to view and measure temperature of profiles at later stages of processing, for example following a quenching section.

A first extruded body can be identified by measuring both the amount of radiation received and the area (or one-dimensional extent) over which the radiation is received. In some embodiments an infra-red profile can be determined across the range of movement of the scanner. Broad peaks in the infra-red profile may be identified as extruded bodies, and these may be distinguished from more narrow peaks which may be created by spurious noise or reflected signals.

In some embodiments there may be three, four or more extruded bodies emanating from respective cavities in a single die. It may or may not be possible to identify all of these extrusions separately, depending on the relative positions of the infra-red sensor and the extrusions. This is because one extrusion may obscure, or partially obscure, another extrusion from the perspective of the infra-red sensor. The system may be able to determine the temperature variations between extrusions from multiple cavities of a single die which may be indicative of cavity restriction or uneven quenching.

The relative temperature of different extruded bodies within the temperature profile measured at an extrusion press exit may be used to monitor the correct function of separate cavities within a multi-cavity die. Cavities which become restricted require more energy to extrude, leading to an increased temperature in the extrusion emanating from the partially blocked die cavity profiles, and a hotter peak in the temperature profile. The relative temperature of different extruded bodies within the temperature profile measured at a post-quench location may be used to monitor the spatial linearity and extents of the quenching system. Differences in temperature at this stage can be indicative of uneven air or water cooling which may produce undesirable differences in product properties between the different extrusions.

The scanner may be triggered to operate when it is determined that an extrusion die has changed. A change in extrusion die is sometimes associated with a change in the position of the extruded body or extruded bodies from the perspective of the infra-red sensor. A scan can be performed whenever the die is changed to ensure that the infra-red sensor is always pointing at an extruded body. In many embodiments the control system of the extrusion press will be configured to automatically trigger one or more scans following die change. In other embodiments scans may be triggered manually by press control operators. Alternatively a sensor may be provided that can detect when a first die is removed and a second die is provided in its place. This may be achieved using a switch, a light sensor or a Hall Effect sensor in just a few examples.

Scans may be triggered immediately after die change; at predetermined time intervals following die change; or on particular billets following die change to correct for small changes in alignment, for example the first and second billets then every fifth billet.

The scanner may be triggered to operate if the amount of infra-red radiation received or temperature measured with the infra-red sensor in the first position changes by a predetermined amount. A change in the amount of infra-red radiation received or measured temperature may be indicative of incorrect alignment between the sensor and the extrusion. The detection of such a change can trigger a new scan to ensure that the sensor is pointing correctly at the extrusion.

The processor may be configured to identify a plurality of regions in which the amount of infra-red radiation received is elevated, and the processor may be configured to identify the first position based on a function of the total amount of infra-red radiation received in the respective regions. In one arrangement the processor may be configured to select the region with the highest product of maximum temperature and full width at half maximum. However, a number of other mathematical functions could be used based on the height and width of the elevated regions (when considered in an embodiment where width is provided in the x-axis of a graph and the temperature or the amount of infra-red radiation received is provided in the y-axis). It has been found that this technique can successfully align the sensor with the hot extruded profile that a manual operator would instinctively choose; the hottest extrusion that offers the widest view to the sensor. It can also filter out potential false positives; some false positives may be created by reflections or spurious noise which tend to create regions that are narrow in width.

After the scanner has moved the infra-red sensor to the first position, the processor is configured to determine if the extruded body has moved laterally, and, if lateral movement is identified, to instruct the infra-red sensor to move to a new position so that it can continue to point at the extruded body. Advantageously this can allow the infra-red sensor to continue to point at the extruded body when it 'wanders' laterally. This kind of lateral movement is common for hot extruded bodies, and the amount of movement experienced depends on the structure of the extrusion and the positional restraints used on the production line. For example, very thin extrusions tend to wander more than thick extrusions having complex structures.

The scanner is configured to move the infra-red sensor between a plurality of positions to either side of the first position, and the processor is configured to construct a profile of the amount of infra-red radiation received, and to determine if the extruded body has moved laterally based on differences of signal strength in the profile. In this way a mini-scan can be performed to maintain alignment between the infra-red sensor and the extruded body. This can take account of lateral movement of the extruded body so that the infra-red sensor can be repositioned, if desired. The mini-scan is preferably performed over a much narrower range than the initial scan. For example, the initial scan may be performed over ±10°, whereas the mini-scan may be performed over ±1° or ±0.1°.

According to another aspect of the invention there is provided a method of automatically aligning an infra-red sensor with a hot extruded body, comprising: moving an infra-red sensor between a plurality of positions so that an axis of the infra-red sensor is pointed in a plurality of directions and the infra-red sensor receives infra-red radiation in the plurality of positions; analysing the amount of infra-red radiation received in the plurality of positions to determine an infra-red profile; identifying a first position in which the axis of the infra-red sensor points at a first extruded body based on the infra-red profile; moving the infra-red sensor to the first position so that the temperature of the first extruded body can be measured; instructing the scanner to move the infra-red sensor between a plurality of positions to either side of the first position; constructing a second infra-red profile based on the radiation received in the positions either side of the first position; and determining if the extruded body has moved laterally based on the second infra-red profile, and if lateral movement is identified, the method further comprises instructing the infra-red sensor to move to a new position so that it can continue to point at the extruded body.

According to another aspect of the invention there is provided a non-transient computer program product comprising executable instructions for automatically aligning an infra-red sensor with a hot extruded body which, when executed on a computer, when connected to an infra-red sensor having an axis along which radiation is received and a scanner configured to move the infra-red sensor between a plurality of positions so that the axis of the infra-red sensor is pointed in a plurality of directions, cause the computer to perform method steps including: moving the infra-red sensor between a plurality of positions so that an axis of the infra-red sensor is pointed in a plurality of directions and the infra-red sensor receives infra-red radiation in the plurality of positions; analysing the amount of infra-red radiation received in the plurality of positions to determine an infra-red profile; identifying a first position in which the axis of the infra-red sensor points at a first extruded body based on the infra-red profile; moving the infra-red sensor to the first position so that the temperature of the first extruded body can be measured; instructing the scanner to move the infra-red sensor between a plurality of positions to either side of the first position; constructing a second infra-red profile based on the radiation received in the positions either side of the first position; and determining if the extruded body has moved laterally based on the second infra-red profile, and if lateral movement is identified, the steps further comprise instructing the infra-red sensor to move to a new position so that it can continue to point at the extruded body.

The computer program product may be provided as part of a central control unit associated with the infra-red sensor. The computer program product may also be provided at a download server, to be downloaded to the central control unit as part of a software update.

Embodiments of the invention are now described, by way of example, with reference to the drawings, in which:

Figure 1 is a perspective view of an infra-red sensor and a controller for use in an embodiment of the present invention;

Figure 2 is a schematic view of an apparatus for aligning an infra-red sensor with a hot extrusion in an embodiment of the present invention;

Figure 3 is a flow chart showing method steps that can be undertaken in an embodiment of the present invention; and

Figure 4 is an example of a graph produced following a scan of an infra-red sensor in an embodiment of the present invention.

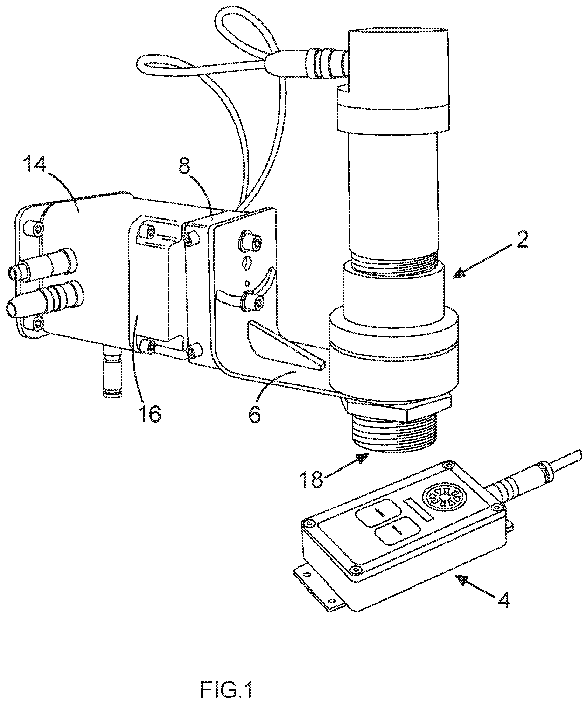

Figure 1 shows an infra-red spot sensor 2 mounted on an L-shaped bracket 6. The infra-red spot sensor 2 has a tubular shape with a central axis. The sensor 2 is arranged to receive infra-red radiation at its lower end 18 which must be pointed precisely at the target surface that is to be monitored. The orientation of the central axis corresponds to the direction in which the sensor 2 is pointing. Therefore, any object that intersects with the central axis will be 'visible' to the sensor 2. The sensor 2 is configured to receive infra-red radiation in at least two wavelength bands, centred on wavelengths $\lambda_1$ and $\lambda_2$.

The system can be used in any orientation. In this embodiment it is shown with movement in a vertical plane. The bracket 6 includes a horizontal section to which the sensor 2 is mounted and a vertical section that is mounted on a motor 16, which is provided internally within an outer housing. The motor is arranged to rotate a metal plate 8 which is attached to the bracket 6 relative to the outer housing of the body. The sensor 2 can be rotated by the motor 16 between two extreme positions. The motor 16 may be a stepper motor or a servo motor or any other motor that provides smooth rotation, allowing the sensor 2 to be scanned across a scene.

A manual controller 4 may be provided for an operator in an optional configuration. The controller 4 includes buttons for controlling the motor 16 and for operating the sensor 2.

A central control unit 14 is connected to the motor 16 and the sensor 2 with electrical cables. The central control unit 14, which includes a processor, is configured to provide instructing signals to the motor 16 and to receive signals from the sensor 2 including information regarding the amount of thermal radiation received and the temperature of extruded material. The central control unit 14 can analyse the information received from the sensor 2 in conjunction with the position of the motor 16 to determine a temperature profile.

The sensor 2 is generally oriented such that it receives radiation from a target surface on a hot extrusion. In fact, the sensor 2 will receive radiation directly emitted by the target according to its temperature and Planck's law combined with radiation from other hot objects in the vicinity that are reflected by the target surface. The proportion of emitted and reflected components depends on the emissivity of that surface for the wavelength band being measured and temperature of the material.

If the sensor 2 detects radiation in a single waveband, the emissivity of the surface and the temperature of any hot objects in the background must be known in order for the temperature of the surface to be calculated. If the sensor 2 detects radiation in at least two wavebands, the emissivity of the surface can be calculated from the relative strengths of the signals in the at least two wavebands.

If $R_1$ and $R_2$ represent the total received radiative flux in two wavelength bands of the sensor 2, $T_t$ represents the surface temperature of the target, $T_b$ represents the background temperature, and p is the proportion of the receiver area of the sensor 2 that is aligned with the hot surface of the target (i.e. the signal strength value), then:

$$R_1 = p.\left[\varepsilon_{1t}.f_1(T_t) + (1 - \varepsilon_{1t}).f_1(T_b)\right] \tag{1}$$

$$R_2 = p.\left[\varepsilon_{2t}.f_2(T_t) + (1 - \varepsilon_{2t}).f_2(T_b)\right] \tag{2}$$

Where $\varepsilon_{1t}$ and $\varepsilon_{2t}$ represent the emissivity of the target surface at the two different wavelengths or wavebands, and the functions $f_1(T)$ and $f_2(T)$ are based on the application of Planck's law to model the radiation from a surface at temperature $T_t$ at those wavebands, but also include instrument specific parameters which limit the amount of that radiation which is collected by that infrared sensor 2 for that band of wavelengths. These functions are generally applied as look-up tables within the central control unit 14 rather than an equation.

In a more simple calculation traditionally implemented in ratio pyrometers, the background correction term can be ignored, and the emissivity at each waveband can be assumed to be equal, or to be related to that of the other waveband by a simple factor *ng* at all target temperatures. In this more simple calculation, for the purpose of illustration:

$$R_1 = p.\left[\varepsilon_{1t}.f_1(T_t)\right] \tag{3}$$

$$R_2 = p.\left[ng.\epsilon_{1t}.f_2(T_t)\right] \tag{4}$$

dividing equation (3) by (4):

$$\frac{R_1}{R_2} = ng.\frac{f_1(T_t)}{f_2(T_t)} = ng.f_{12}(T_t) \tag{5}$$

Where ng represents the ratio of emissivity values in the two wavelength bands (the non-greyness) and $f_{12}$ is the ratio of functions $f_1$ and $f_2$ or their look-up tables.

For many materials the non-greyness is known and constant, which means it is possible to calculate $T_t$. This means that the temperature of the extrusion can be measured and monitored on a continuous basis.

Once temperature $T_t$ is known, substitution of $T_t$ back into equation (3) or (4) enables $p.\varepsilon_{1t}$ and $p.\varepsilon_{2t}$ to be calculated. If the sensor 2 is pointing directly at the target surface then the signal strength value p is 1. However if there is any misalignment then the signal strength value p, will be reduced. In these circumstances the measured temperature will still be accurate, despite the reduction in signal strength. However, measured temperature will be inaccurate if the sensor 2 becomes entirely misaligned (such that p=0) since the sensor will instead be monitoring the temperature of whatever object intersects with its central axis.

For more complicated algorithm thermometers, a further equation is derived to define the surface emissivity at the second wavelength as a function of the emissivity at the first wavelength and (for some materials and applications) the target temperature:

$$\varepsilon_{2t} = g(\varepsilon_{1t}, T_t) \tag{6}$$

The function g is typically established as a best fit to experimental data for a particular surface material. It may be applied as an equation or a lookup table in the sensor 2.

Substituting equation (6) into (2),

$$R_2 = p.\,[g(\varepsilon_{1t}, T_t).f_2(T_t) + \left(1 - g(\varepsilon_{1t}, T_t)\right).f_2(T_b)] \tag{7}$$

When the sensor 2 is fully aligned with the target surface, the value of p is 1. If the background temperature is known, and the functions $f_1$, $f_2$ and g are known, then equations (1) and (7) can be solved as simultaneous equations for $\varepsilon_{1t}$ and $T_t$. In the sensor 2 or the central control unit 14, the solution may be implemented as an iterative process in which different values of emissivity are used in both equation (1) and equation (7), and the values of $T_t$ that are calculated by the two different equations are compared. The correct value for $\varepsilon_{1t}$ will give the best match between the two calculations.

When the sensor 2 is fully aligned with the target surface the values of $\varepsilon_{1t}$, $\varepsilon_{2t}$, and $T_t$ can be calculated. During a scan, as the motor 16 moves the sensor 2 so that it points at the edge of a hot extrusion, the measured signal strength value p will decrease. If the sensor 2 detects radiation at three or more discrete wavebands, the exact value of p can be calculated. If the sensor 2 detects radiation in only two wavebands, the effect appears as a reduction in the emissivity values $\varepsilon_{1t}$ and $\varepsilon_{2t}$. The change in the value of p or the apparent decrease in the surface emissivity can be used to identify the edge of the extrusion and can assist with re-pointing the sensor 2.

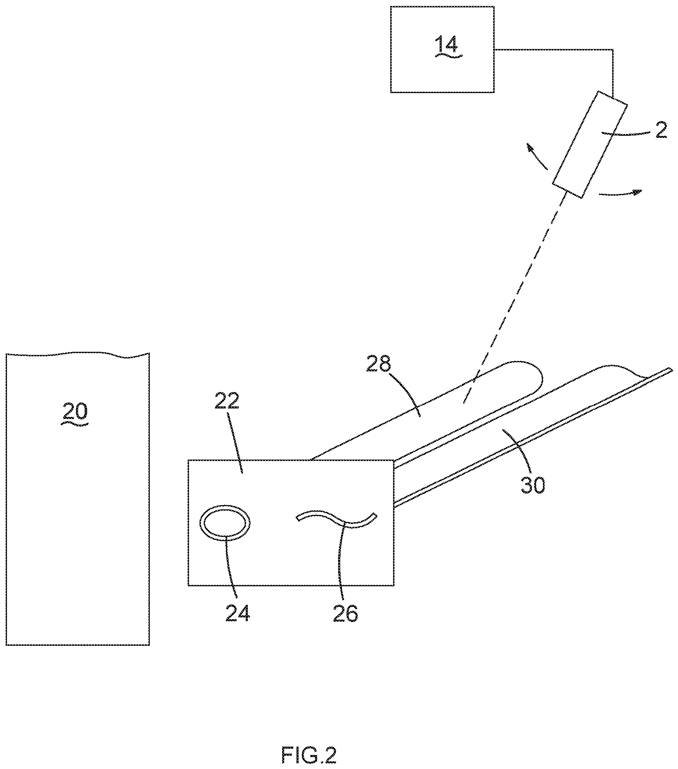

Figure 2 is a schematic view of a metal extrusion production line showing the infra-red sensor 2 in use. In this example hot billets 20 are provided with an extrusion die 22 at one end. The extrusion die 22 includes a plurality of cavities 24, 26, respectively arranged to produce extruded bodies 28, 30. In this example the extruded bodies 28, 30 are made of an aluminium alloy, which has a melting point of over 600°C. Solid aluminium alloy extrusions can be extruded at temperatures of around 500-600°C to produce a wide variety of different shapes for use in automotive and other industrial applications. A press is provided at one end of the hot billet 20 to urge it towards the die 22 and to produce the extrusions 28, 30.

In this example a first die cavity 24 has an annular shape to produce an extrusion that is a hollow cylinder. The second die cavity 26 has a more complex sinuous shape to produce an extrusion that may be used as a panel. An extrusion die 22 may be provided with three or more cavities that are at different positions with respect to the hot billets 20. Normally cavities in a single die will have the same shape, but it is also possible that they may have different shapes, as shown in Figure 2. The extrusions output from the die 22 are received on a bed of rollers that can convey them onwards.

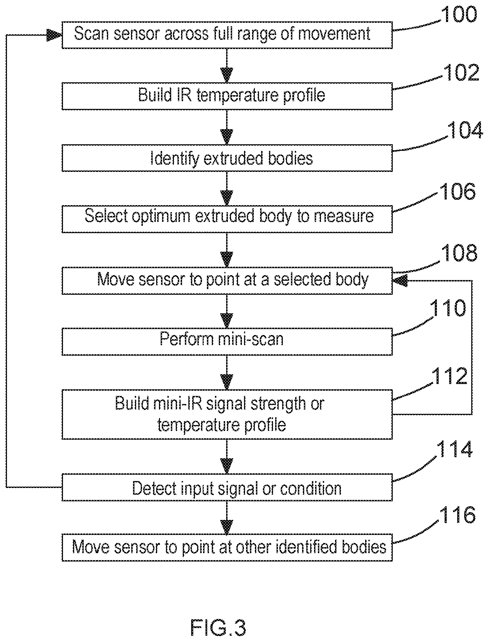

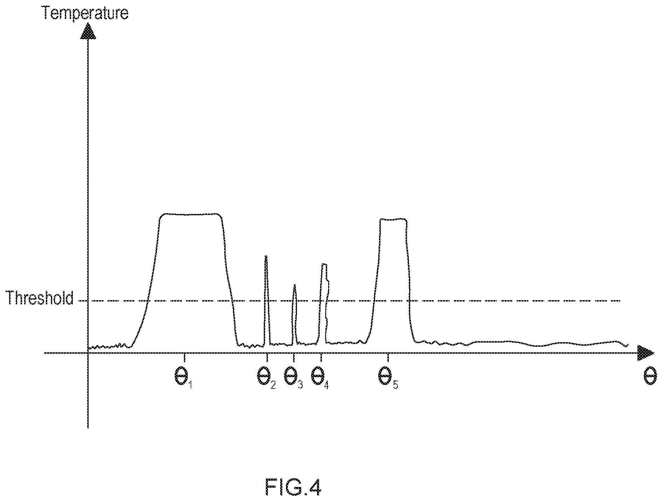

Figure 3 is a flow diagram showing a series of steps that can be undertaken in an embodiment of the invention. At step 100 the motor 16 is configured to scan the sensor 2 across the full range of movement required to survey the scene. In this example the motor 16 can rotate the sensor 2 smoothly from $\theta_{min}$ to $\theta_{max}$. Readings are captured from each waveband in the sensor 2 at intervals of 0.1°. At step 102 the central control unit 14 is configured to construct an infra-red profile which would normally be a plot of the temperature at each position between $\theta_{min}$ and $\theta_{max}$. Figure 4 is an example of such a profile. In some embodiments, other profiles based on the amount of radiation received by the sensor 2 as a function of position, such as signal strength or radiance, may be plotted.

At step 104 the central control unit 14 is configured to identify regions in the profile where the temperature or the amount of infra-red radiation is greater than a first threshold value. The threshold value may be a proportion of the maximum value seen within the profile, or it may be a preset value based on the known temperature range of the extruded material, or it may be related to the previous temperature seen in the previous scan. In the example of Figure 4, five such regions are identified with angular values of $\theta_1$, $\theta_2$, $\theta_3$, $\theta_4$ and $\theta_5$. A minimum width value may be used to eliminate noise or reflections, which in this case would eliminate $\theta_2$, $\theta_3$ and $\theta_4$. These spikes are more likely to be created by spurious noise or reflections of radiation emitted by hot items in the surroundings. The regions at $\theta_1$, $\theta_5$ are identified as hot extruded bodies because they have high signal strength values and are relatively broad. At step 106 the central control unit 14 is configured to determine the optimum hot region for measurement. This may include selecting the hot region with the highest maximum temperature. Alternatively, the central control unit 14 could be configured to favour a wider but slightly cooler region by calculating the product of maximum temperature and the angular width of the region at the threshold value. In this example the extruded body at $\theta_1$ yields a higher value than the extruded body at $\theta_5$ for the product of maximum amount of infra-red radiation received and the width of the region.

The temperature of a plurality of extruded bodies can be monitored in this way and, if necessary, compared. Any difference between the temperatures of these bodies may be indicative of a fault or an alarm condition. In one example, a difference in temperature may be indicative of a die cavity 24, 26 that is starting to become blocked. Such a condition can lead to thinner extrusions that are produced with increased temperature, and this can be detected using the present technique. Additionally, a plurality of extruded bodies can be monitored during quenching or at the quench exit. Differences in temperature at this stage can be indicative of uneven air or water cooling which may produce undesirable differences in product properties between the different extrusions.

If a ratio or algorithm thermometer is used, regions that correspond to hot extruded bodies in a temperature profile have a 'top hat' shape: they have a broad peak that is relatively flat and sides with steep edges. If a single wavelength thermometer is used or if the profile is plotted as radiance or signal strength against position, the peaks would have more gradually sloping edges. The top hat peak profile is generated by the ratio or algorithm method compensating for the signal loss when the sensor 2 starts to become misaligned with the extruded body so that less than 100% of the receiver area of the sensor 2 is aligned with the hot surface of the target. This is desirable so that the correct temperature can be measured in positions of partial misalignment. However, it is preferable to measure within the middle of an extrusion so that small movements are less likely to move the extrusion completely beyond the view of the sensor 2, and so that the signal strength is optimum leading to a more accurate less noisy temperature measurement.

If signal strength is monitored as well as temperature it is possible to determine when the sensor 2 starts to become misaligned with an extruded body as a decrease in the signal strength value, and to initiate re-alignment, before the temperature measurement is unduly affected. This tracking mode of operation can keep the sensor 2 aligned with a 'wandering' extrusion . This is important because extrusions are frequently allowed to run out along a bed of rollers where the permitted lateral movement may be many times the width of the infra-red spot. Without active tracking, this would lead to noisy readings then a cessation of temperature measurements.

At step 108 the central control unit 14 instructs the motor 16 to move the sensor 2 to $\theta_1$ so that it points at the first extruded body. The sensor 2 can therefore monitor the temperature of the extruded body in a continuous way and the central control unit 14 can provide feedback signals to adjust system parameters in order to maintain a constant temperature in the extruded bodies. The signal strength is also monitored, either as the signal strength value p, the raw radiance value of the infrared signal, or as an apparent change in the emissivity of the material.

Steps 110 and 112 demonstrate a tracking mode for locations where the extrusion position is not well defined such as post-quench locations. At step 110 a mini-scan is performed in order to maintain alignment between the sensor 2 and the selected extrusion. According to this technique, the motor 16 rotates the sensor 2 slightly to one side of the extrusion and then to the other. The angular range of the mini-scan is much smaller than the full scan at step 100, perhaps around 0.1° in either direction. The purpose of the mini-scan is to identify and correct for slight lateral movement of the extruded body as will occur naturally with increasing distance from the press exit if the profiles are not restrained. At step 112 a mini infra-red profile is constructed by the central control unit 14 for the range of movement covered in the mini-scan. In the case of a mini-scan, the profile will normally be plotted as signal strength, radiance, or apparent emissivity. The maximum value in the mini-scan will be identified as the position of this maximum value. The sensor 2 can then be moved by the motor 16 so that it is re-pointed at the centre of the extruded body, if any lateral movement is identified.

At step 114 one or more conditions can be detected by the central control unit 14 that would prompt the system to perform a new scan. One example condition is replacement of the extrusion die 22. Typically a new extrusion die 22 with new cavities will require re-alignment of the sensor 2. In many embodiments the control system of the extrusion press will be configured to automatically trigger one or more scans following die change. In other embodiments scans may be triggered manually by press control operators. Alternatively replacement of an extrusion die can be detected by a sensor such as an optical sensor or a mechanical switch, or by the cessation of infra-red measurements from a sensor 2 mounted close to the press exit

A scan may also be triggered at step 114 if any of the measured temperature, the signal strength value, the raw radiation received or the apparent emissivity fall below a predetermined threshold level.

Scans may be triggered immediately after die change; at predetermined time intervals following die change; or on particular billets following die change to correct for small changes in alignment, for example the first and second billets then every fifth billet.

At step 116 the central control unit 14 or the manual controller 4 could be used to point the sensor 2 at other identified extrusions in the scene. Thus, in the example of Figures 2 and 4 the sensor 2 can be pointed at the second extrusion produced by the die 22 at angle $\theta_5$.

## Claims

**1.** An apparatus for automatically aligning an infra-red sensor (2) with a hot extruded body (28, 30), comprising:

an infra-red sensor (2) having an axis along which radiation is received;

a scanner configured to move (100) the infra-red sensor (2) between a plurality of positions so that the axis of the infra-red sensor (2) is pointed in a plurality of directions; and

a processor configured to:

analyse (102) the amount of infra-red radiation received in the plurality of positions to determine an infra-red profile;

identify (104) a first position in which the axis of the infra-red sensor (2) points at a first extruded body (28, 30) based on the infra-red profile;

instruct (108) the scanner to move the infra-red sensor (2) to the first position so that the temperature of the first extruded body (28, 30) can be measured;

instruct (110) the scanner to move the infra-red sensor (2) between a plurality of positions to either side of the first position;

construct (112) a second infra-red profile based on the radiation received in the positions either side of the first position; and

determine if the extruded body (28, 30) has moved laterally based on the second infra-red profile, and if lateral movement is identified, the processor is further configured to instruct the infra-red sensor (2) to move to a new position so that it can continue to point at the extruded body (28, 30).

2. The apparatus of claim 1, wherein the scanner is triggered to operate when it is determined that an extrusion die (22) has changed.

3. The apparatus of claim 1 or claim 2, wherein the scanner is triggered to operate if the amount of infra-red radiation received with the infra-red sensor (2) in the first position changes by a predetermined amount.

4. The apparatus of any of the preceding claims, wherein the processor is configured to identify a plurality of regions in which the amount of infra-red radiation received is elevated, and wherein the processor is configured to identify the first position based on a function of the width and the amount of infra-red radiation received in the respective regions.

5. The apparatus of any of the preceding claims, wherein the scanner is arranged to rotate the infra-red sensor (2) so that it is pointed in different directions.

6. The apparatus of any of claims 1 to 4, wherein the scanner is arranged to translate the infra-red sensor (2) so that it is pointed along different parallel axes.

7. The apparatus of any of the preceding claims, wherein the processor is configured to identify a second position in which the axis of the infra-red sensor (2) points at a second extruded body (28, 30) by measuring the amount of radiation received in the second position and in a plurality of positions around the second position, and wherein the processor is configured to instruct the scanner to move the infra-red sensor (2) to the second position so that the temperature of the second extruded body (28, 30) can be measured.

8. The apparatus of any of the preceding claims, wherein the processor is configured to determine temperature values based on the amount of infra-red radiation received in the plurality of positions, and wherein the first position of the infra-red sensor (2) is identified based on the temperature value in the first position and in a plurality of positions around the first position.

9. A method of automatically aligning an infra-red sensor (2) with a hot extruded body (28, 30), comprising:

moving (100) an infra-red sensor (2) between a plurality of positions so that an axis of the infra-red sensor (2) is pointed in a plurality of directions and the infra-red sensor (2) receives infra-red radiation in the plurality of positions;

analysing (102) the amount of infra-red radiation received in the plurality of positions to determine an infra-red profile;

identifying (104) a first position in which the axis of the infra-red sensor (2) points at a first extruded body (28, 30) based on the infra-red profile;

moving (108) the infra-red sensor (2) to the first position so that the temperature of the first extruded body (28, 30) can be measured;

instructing (110) the scanner to move the infra-red sensor (2) between a plurality of positions to either side of the first position;

constructing (112) a second infra-red profile based on the radiation received in the positions either side of the first position; and

determining if the extruded body (28, 30) has moved laterally based on the second infra-red profile, and if lateral movement is identified, the method further comprises instructing the infra-red sensor (2) to move to a new position so that it can continue to point at the extruded body (28, 30).

10. A computer program product comprising executable instructions for automatically aligning an infra-red sensor (2) with a hot extruded body (28, 30) which, when executed on a computer, when connected to an infra-red sensor (2) having an axis along which radiation is received and a scanner configured to move the infra-red sensor (2) between a plurality of positions so that the axis of the infra-red sensor (2) is pointed in a plurality of directions, cause the computer to perform steps including:

moving (100) the infra-red sensor (2) between a plurality of positions so that an axis of the infra-red sensor (2) is pointed in a plurality of directions and the infra-red sensor (2) receives infra-red radiation in the plurality of positions;

analysing (102) the amount of infra-red radiation received in the plurality of positions to determine an infra-red profile;

identifying (104) a first position in which the axis of the infra-red sensor (2) points at a first extruded body (28, 30) based on the infra-red profile;

moving (108) the infra-red sensor (2) to the first position so that the temperature of the first extruded body (28, 30) can be measured;

instructing (110) the scanner to move the infra-red sensor (2) between a plurality of positions to either side of the first position;

constructing (112) a second infra-red profile based on the radiation received in the positions either side of the first position; and

determining if the extruded body (28, 30) has moved laterally based on the second infra-red profile, and if lateral movement is identified, the steps further comprise instructing the infra-red sensor (2) to move to a new position so that it can continue to point at the extruded body (28, 30).

**Patentansprüche**

1. Einrichtung zum automatischen Ausrichten eines Infrarotsensors (2) mit einem warmstranggepressten Körper (28, 30), umfassend:

einen Infrarotsensor (2), der eine Achse aufweist, entlang derer Strahlung empfangen wird;

einen Scanner, der konfiguriert ist, um den Infrarotsensor (2) zwischen einer Vielzahl von Positionen zu bewegen (100), sodass die Achse des Infrarotsensors (2) in eine Vielzahl von Richtungen zeigt; und einen Prozessor, der konfiguriert ist zum:

Analysieren (102) der Menge von Infrarotstrahlung, die in der Vielzahl von Positionen empfangen wird, um ein Infrarotprofil zu bestimmen;

Identifizieren (104) einer ersten Position, in der die Achse des Infrarotsensors (2) auf einen ersten stranggepressten Körper (28, 30) zeigt, basierend auf dem Infrarotprofil;

Anweisen (108) des Scanners, den Infrarotsensor (2) in die erste Position zu bewegen, sodass die Temperatur des ersten stranggepressten Körpers (28, 30) gemessen werden kann;

Anweisen (110) des Scanners, den Infrarotsensor (2) zwischen einer Vielzahl von Positionen zu beiden Seiten der ersten Position zu bewegen;

Erstellen (112) eines zweiten Infrarotprofils basierend auf der Strahlung, die an den Positionen auf beiden Seiten der ersten Position empfangen wird; und

Bestimmen, basierend auf dem zweiten Infrarotprofil, ob sich der stranggepresste Körper (28, 30) seitlich bewegt hat, und falls eine seitliche Bewegung identifiziert wird, der Prozessor weiter konfiguriert ist, den Infrarotsensor (2) anzuweisen, sich in eine neue Position zu bewegen, sodass er weiter auf den stranggepressten Körper (28, 30) zeigen kann.

2. Einrichtung nach Anspruch 1, wobei der Scanner zum Betrieb ausgelöst wird, wenn bestimmt wird, dass sich eine Strangpressmatrize (22) geändert hat.

3. Einrichtung nach Anspruch 1 oder Anspruch 2, wobei der Scanner zum Betrieb ausgelöst wird, wenn sich die Menge von empfangener Infrarotstrahlung, mit dem Infrarotsensor (2) in der ersten Position, um eine vorbestimmte Menge ändert.

4. Einrichtung nach einem der vorstehenden Ansprüche, wobei der Prozessor konfiguriert ist, eine Vielzahl von Regionen zu identifizieren, in denen die Menge von empfangener Infrarotstrahlung erhöht ist, und wobei der Prozessor konfiguriert ist, die erste Position basierend auf einer Funktion der Breite und der Menge von Infrarotstrahlung zu identifizieren, die in den jeweiligen Regionen empfangen wird.

5. Einrichtung nach einem der vorstehenden Ansprüche, wobei der Scanner angeordnet ist, um den Infrarotsensor (2) zu drehen, sodass er in verschiedene Richtungen zeigt.

6. Einrichtung nach einem der Ansprüche 1 bis 4, wobei der Scanner angeordnet ist, um den Infrarotsensor (2) zu verschieben, sodass er entlang verschiedener paralleler Achsen zeigt.

7. Einrichtung nach einem der vorstehenden Ansprüche, wobei der Prozessor konfiguriert ist, eine zweite Position zu identifizieren, in der die Achse des Infrarotsensors (2) auf einen zweiten stranggepressten Körper (28, 30) zeigt, indem er die Menge von Strahlung misst, die in der zweiten Position und in einer Vielzahl von Positionen um die zweite Position herum empfangen wird, und wobei der Prozessor konfiguriert ist, den Scanner anzuweisen, den Infrarotsensor (2) in die zweite Position zu bewegen, so dass die Temperatur des zweiten stranggepressten Körpers (28, 30) gemessen werden kann.

8. Einrichtung nach einem der vorstehenden Ansprüche, wobei der Prozessor konfiguriert ist, Temperaturwerte basierend auf der Menge von Infrarotstrahlung zu bestimmen, die in der Vielzahl von Positionen empfangen wird, und wobei die erste Position des Infrarotsensors (2) basierend auf dem Temperaturwert in der ersten Position und in einer Vielzahl von Positionen um die erste Position herum identifiziert wird.

9. Verfahren zum automatischen Ausrichten eines Infrarotsensors (2) mit einem warmstranggepressten Körper (28, 30), umfassend:

Bewegen (100) eines Infrarotsensors (2) zwischen einer Vielzahl von Positionen, sodass eine Achse des Infrarotsensors (2) in eine Vielzahl von Richtungen zeigt und der Infrarotsensor (2) Infrarotstrahlung in der Vielzahl von Positionen empfängt;
Analysieren (102) der Menge von Infrarotstrahlung, die der in der Vielzahl von Positionen empfangen wird, um ein Infrarotprofil zu bestimmen;
Identifizieren (104) einer ersten Position, in der die Achse des Infrarotsensors (2) auf einen ersten stranggepressten Körper (28, 30) zeigt, basierend auf dem Infrarotprofil;
Bewegen (108) des Infrarotsensors (2) in die erste Position, sodass die Temperatur des ersten stranggepressten Körpers (28, 30) gemessen werden kann;
Anweisen (110) des Scanners, den Infrarotsensor (2) zwischen einer Vielzahl von Positionen zu beiden Seiten der ersten Position zu bewegen;
Erstellen (112) eines zweiten Infrarotprofils basierend auf der Strahlung, die an den Positionen auf beiden Seiten der ersten Position empfangen wird; und
Bestimmen, ob sich der stranggepresste Körper (28, 30) seitlich bewegt hat, basierend auf dem zweiten Infrarotprofil, und falls eine seitliche Bewegung identifiziert wird, das Verfahren weiter Anweisen des Infrarotsensors (2) umfasst, sich in eine neue Position zu bewegen, sodass er weiter auf den stranggepressten Körper (28, 30) zeigen kann.

10. Computerprogrammprodukt, das ausführbare Anweisungen zum automatischen Ausrichten eines Infrarotsensors (2) mit einem warmstranggepressten Körper (28, 30) umfasst, die, wenn sie auf einem Computer ausgeführt werden, wenn er mit einem Infrarotsensor (2), der eine Achse aufweist, entlang derer Strahlung empfangen wird, und einem Scanner verbunden ist, der konfiguriert ist, den Infrarotsensor (2) zwischen einer Vielzahl von Positionen zu bewegen, sodass die Achse des Infrarotsensors (2) in eine Vielzahl von Richtungen zeigt, den Computer zum Durchführen von Schritten veranlasst, beinhaltend:

Bewegen (100) des Infrarotsensors (2) zwischen einer Vielzahl von Positionen, sodass eine Achse des Infrarotsensors (2) in eine Vielzahl von Richtungen zeigt und der Infrarotsensor (2) Infrarotstrahlung in der Vielzahl von Positionen empfängt;

Analysieren (102) der Menge von Infrarotstrahlung, die der in der Vielzahl von Positionen empfangen wird, um ein Infrarotprofil zu bestimmen;

Identifizieren (104) einer ersten Position, in der die Achse des Infrarotsensors (2) auf einen ersten stranggepressten Körper (28, 30) zeigt, basierend auf dem Infrarotprofil;

Bewegen (108) des Infrarotsensors (2) in die erste Position, sodass die Temperatur des ersten stranggepressten Körpers (28, 30) gemessen werden kann;

Anweisen (110) des Scanners, den Infrarotsensor (2) zwischen einer Vielzahl von Positionen zu beiden Seiten der ersten Position zu bewegen;

Erstellen (112) eines zweiten Infrarotprofils basierend auf der Strahlung, die an den Positionen auf beiden Seiten der ersten Position empfangen wird; und

Bestimmen, ob sich der stranggepresste Körper (28, 30) seitlich bewegt hat, basierend auf dem zweiten Infrarotprofil, und falls eine seitliche Bewegung identifiziert wird, die Schritte weiter Anweisen des Infrarotsensors (2) umfassen, sich in eine neue Position zu bewegen, sodass er weiter auf den stranggepressten Körper (28, 30) zeigen kann.

## Revendications

1. Appareil pour aligner automatiquement un capteur infrarouge (2) sur un corps extrudé chaud (28, 30), comprenant :

   un capteur infrarouge (2) présentant un axe le long duquel un rayonnement est reçu ;
   un dispositif de balayage configuré pour déplacer (100) le capteur infrarouge (2) entre une pluralité de positions de telle sorte que l'axe du capteur infrarouge (2) soit pointé dans une pluralité de directions ; et un processeur configuré pour :

   analyser (102) la quantité de rayonnement infrarouge reçue dans la pluralité de positions pour déterminer un profil infrarouge ;
   identifier (104) une première position dans laquelle l'axe du capteur infrarouge (2) pointe au niveau d'un premier corps extrudé (28, 30) sur la base du profil infrarouge ;
   donner comme instruction (108) au dispositif de balayage de déplacer le capteur infrarouge (2) vers la première position de telle sorte que la température du premier corps extrudé (28, 30) puisse être mesurée ;
   donner comme instruction (110) au dispositif de balayage de déplacer le capteur infrarouge (2) entre une pluralité de positions de chaque côté de la première position ;
   construire (112) un second profil infrarouge sur la base du rayonnement reçu aux positions de chaque côté de la première position ; et
   déterminer si le corps extrudé (28, 30) s'est déplacé latéralement sur la base du second profil infrarouge et, si un déplacement latéral est identifié, le processeur est en outre configuré pour donner comme instruction au capteur infrarouge (2) de se déplacer vers une nouvelle position de telle sorte qu'il puisse continuer à pointer au niveau du corps extrudé (28, 30).

2. Appareil selon la revendication 1, dans lequel le dispositif de balayage est déclenché pour fonctionner lorsqu'il est déterminé qu'une filière d'extrusion (22) a changé.

3. Appareil selon la revendication 1 ou la revendication 2, dans lequel le dispositif de balayage est déclenché pour fonctionner si la quantité de rayonnement infrarouge reçue avec le capteur infrarouge (2) dans la première position change d'une quantité prédéterminée.

4. Appareil selon une quelconque revendication précédente, dans lequel le processeur est configuré pour identifier une pluralité de régions dans lesquelles la quantité de rayonnement infrarouge reçue est élevée et dans lequel le processeur est configuré pour identifier la première position sur la base d'une fonction de la largeur et de la quantité de rayonnement infrarouge reçue dans les régions respectives.

5. Appareil selon une quelconque précédente, dans lequel le dispositif de balayage est agencé pour faire tourner le capteur infrarouge (2) de telle sorte qu'il soit pointé dans des directions différentes.

6. Appareil selon une quelconque des revendications 1 à 4, dans lequel le dispositif de balayage est agencé pour déplacer le capteur infrarouge (2) en translation de telle sorte qu'il soit pointé le long d'axes parallèles différents.

**7.** Appareil selon une quelconque revendication précédente, dans lequel le processeur est configuré pour identifier une seconde position dans laquelle l'axe du capteur infrarouge (2) pointe au niveau d'un second corps extrudé (28, 30) en mesurant la quantité de rayonnement reçue dans la seconde position et dans une pluralité de positions autour de la seconde position et dans lequel le processeur est configuré pour donner comme instruction au dispositif de balayage de déplacer le capteur infrarouge (2) vers la seconde position de telle sorte que la température du second corps extrudé (28, 30) puisse être mesurée.

**8.** Appareil selon une quelconque revendication précédente, dans lequel le processeur est configuré pour déterminer des valeurs de température sur la base de la quantité de rayonnement infrarouge reçue dans la pluralité de positions et dans lequel la première position du capteur infrarouge (2) est identifiée sur la base de la valeur de température dans la première position et dans une pluralité de positions autour de la première position.

**9.** Procédé d'alignement automatique d'un capteur infrarouge (2) sur un corps extrudé chaud (28, 30), comprenant :

le déplacement (100) d'un capteur infrarouge (2) entre une pluralité de positions de telle sorte qu'un axe du capteur infrarouge (2) soit pointé dans une pluralité de directions et que le capteur infrarouge (2) reçoive un rayonnement infrarouge dans la pluralité de positions ;
l'analyse (102) de la quantité de rayonnement infrarouge reçue dans la pluralité de positions pour déterminer un profil infrarouge ;
l'identification (104) d'une première position dans laquelle l'axe du capteur infrarouge (2) pointe vers un premier corps extrudé (28, 30) sur la base du profil infrarouge ;
le déplacement (108) du capteur infrarouge (2) vers la première position de telle sorte que la température du premier corps extrudé (28, 30) puisse être mesurée ;
l'instruction (110) donnée au dispositif de balayage de déplacer le capteur infrarouge (2) entre une pluralité de positions de chaque côté de la première position ;
la construction (112) d'un second profil infrarouge sur la base du rayonnement reçu dans les positions de chaque côté de la première position ; et
la détermination pour savoir si le corps extrudé (28, 30) s'est déplacé latéralement sur la base du second profil infrarouge et, si un déplacement latéral est identifié, le procédé comprend en outre l'instruction donnée au capteur infrarouge (2) de se déplacer vers une nouvelle position de telle sorte qu'il puisse continuer à pointer vers le corps extrudé (28, 30).

**10.** Produit programme informatique comprenant des instructions exécutables pour aligner automatiquement un capteur infrarouge (2) sur un corps extrudé chaud (28, 30) qui, lorsqu'elles sont exécutées sur un ordinateur, lorsqu'il est connecté à un capteur infrarouge (2) présentant un axe le long duquel le rayonnement est reçu et un dispositif de balayage configuré pour déplacer le capteur infrarouge (2) entre une pluralité de positions de telle sorte que l'axe du capteur infrarouge (2) soit pointé dans une pluralité de directions, amènent l'ordinateur à effectuer des étapes comprenant :

le déplacement (100) du capteur infrarouge (2) entre une pluralité de positions de telle sorte qu'un axe du capteur infrarouge (2) soit pointé dans une pluralité de directions et que le capteur infrarouge (2) reçoive un rayonnement infrarouge dans la pluralité de positions ;
l'analyse (102) de la quantité de rayonnement infrarouge reçue dans la pluralité de positions pour déterminer un profil infrarouge ;
l'identification (104) d'une première position dans laquelle l'axe du capteur infrarouge (2) pointe vers un premier corps extrudé (28, 30) sur la base du profil infrarouge ;
le déplacement (108) du capteur infrarouge (2) vers la première position de telle sorte que la température du premier corps extrudé (28, 30) puisse être mesurée ;
l'instruction (110) donnée au dispositif de balayage de déplacer le capteur infrarouge (2) entre une pluralité de positions de chaque côté de la première position ;
la construction (112) d'un second profil infrarouge sur la base du rayonnement reçu dans les positions de chaque côté de la première position ; et
la détermination pour savoir si le corps extrudé (28, 30) s'est déplacé latéralement sur la base du second profil infrarouge et, si un déplacement latéral est identifié, les étapes comprennent en outre l'instruction donnée au capteur infrarouge (2) de se déplacer vers une nouvelle position de telle sorte qu'il puisse continuer à pointer vers le corps extrudé (28, 30).

EP 3 762 693 B1

FIG.1

13

FIG.2

Scan sensor across full range of movement — 100

Build IR temperature profile — 102

Identify extruded bodies — 104

Select optimum extruded body to measure — 106

Move sensor to point at a selected body — 108

Perform mini-scan — 110

Build mini-IR signal strength or temperature profile — 112

Detect input signal or condition — 114

Move sensor to point at other identified bodies — 116

FIG.3

FIG.4

**EP 3 762 693 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5144122 A